(19)

Europäisches
Patentamt

European
Patent Office

Office européen
des brevets

(11) **EP 4 389 819 A1**

(12) **EUROPEAN PATENT APPLICATION**

(43) Date of publication:
   **26.06.2024 Bulletin 2024/26**

(21) Application number: **22214924.7**

(22) Date of filing: **20.12.2022**

(51) International Patent Classification (IPC):
   **C08L 23/14** (2006.01)   **C08F 210/06** (2006.01)
   **B32B 27/08** (2006.01)   **C08J 5/18** (2006.01)

(52) Cooperative Patent Classification (CPC):
   (C-Sets available)
   **C08F 210/06; B32B 27/08; C08J 5/18; C08L 23/12;**
   C08J 2323/14; C08J 2423/16   (Cont.)

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(71) Applicant: **Borealis AG**
   **1020 Vienna (AT)**

(72) Inventors:
   • **WANG, Jingbo**
    **4021 Linz (AT)**
   • **GAHLEITNER, Markus**
    **4021 Linz (AT)**
   • **FRIEDRICH, Karlheinz**
    **2320 Schwechat (AT)**
   • **LESKINEN, Pauli**
    **06101 Porvoo (FI)**

(74) Representative: **Kador & Partner Part mbB**
   **Corneliusstraße 15**
   **80469 München (DE)**

(54) **POLYOLEFIN COMPOSITION WITH EXCELLENT BALANCE OF PROPERTIES**

(57)   The present invention relates to a polyolefin composition having excellent balance between low temperature impact, stiffness and transparency. The polyolefin composition comprises comonomer units derived from propylene, ethylene and 1-butene, and is characterized by a high content of a xylene insoluble fraction (XI) and a lower content of a xylene soluble fraction (XS) with a specific intrinsic viscosity IV. The polyolefin composition is preferably prepared from a heterophasic polypropylene composition and an ethylene homopolymer. The heterophasic polypropylene composition comprises a propylene butene copolymer and a propylene ethylene elastomer, and is prepared using a Ziegler-Natta catalyst. Furthermore, the present invention also relates to a preparation process for the polyolefin composition, and to articles comprising the polyolefin composition as well as to use of the polyolefin composition for the manufacture of articles.

EP 4 389 819 A1

(52) Cooperative Patent Classification (CPC): (Cont.)

C-Sets
**C08F 210/06, C08F 2/002;**
**C08F 210/06, C08F 4/6465;**
**C08F 210/06, C08F 4/6492;**
**C08F 210/06, C08F 4/651;**
**C08F 210/06, C08F 4/6546;**
**C08L 23/12, C08L 23/16, C08L 23/0815;**
C08F 210/06, C08F 210/08, C08F 2500/35,
C08F 2500/27, C08F 2500/12;
C08F 210/06, C08F 210/16, C08F 210/08,
C08F 2500/35, C08F 2500/27, C08F 2500/12,
C08F 2500/17

## Description

The present invention relates to a polyolefin composition having excellent balance between low temperature impact, stiffness and transparency. The polyolefin composition comprises comonomer units derived from propylene, ethylene and 1-butene, and is characterized by a high content of a xylene insoluble fraction (XI) and a lower content of a xylene soluble fraction (XS) with a specific intrinsic viscosity IV. The polyolefin composition is preferably prepared from a heterophasic polypropylene composition and an ethylene homopolymer. The heterophasic polypropylene composition comprises a propylene butene copolymer and a propylene ethylene elastomer, and is prepared using a Ziegler-Natta catalyst. Furthermore, the present invention also relates to a preparation process for the polyolefin composition, and to articles comprising the polyolefin composition as well as to use of the polyolefin composition for the manufacture of articles.

## Background

Polypropylene is widely used in film and molding applications, including caps & closure, thin-wall packaging, houseware and similar applications. In these applications, high stiffness and good impact strength is required. For these applications, often also balanced optical properties are important, e.g., such as transparency in food packaging applications.

Heterophasic propylene copolymers are often used in such packaging applications due to their good balance of properties. Typically, these are copolymers of propylene and ethylene. However, heterophasic propylene polymers with further comonomers are also known in packaging applications. For example, EP-A-3126411 describes a heterophasic propylene copolymer comprising a matrix being a propylene - $C_4$ to $C_{12}$ alpha-olefin and a propylene ethylene elastomer as the dispersed phase. This heterophasic propylene polymer is prepared using a single-site solid particulate catalyst. Although some of the exemplified polymers have an acceptable impact strength, other mechanical properties thereof such as stiffness may require further improvement.

Moreover, optical properties are often impaired in heterophasic propylene polymers due to the dispersed rubber phase having a different refractive index, which leads to light scattering and thus results in non-transparent materials.

In order to fulfill the different requirements on packaging applications, balance of mechanical properties in terms of stiffness and impact strength is required.

Polymers with higher stiffness may allow for the use of lower film thickness, leading to both material and energy savings. Good impact behavior is also essential so that the contents of the packaging remain safely contained, even if dropped. In particular, good impact behavior at low temperatures is important for packaging of frozen goods. Polymers with good optical properties, such as low haze, are desired in applications wherein it is important to the consumer to be able to see the content of the packaged goods through the packaging.

## Object of the invention

It is thus an object of the present invention to provide new polyolefin compositions, which can offer improved balance of stiffness and impact strength combined with good optical properties. In particular, polyolefin compositions for application in the packaging field, such as molded articles or films, are desired.

## Summary of the invention

It has been surprisingly found that the above-described object can be achieved by a polyolefin composition comprising:

I) 55 to 95 wt.-%, based on the total weight of the polyolefin composition and determined at 25 °C according to ISO16152, of a xylene insoluble fraction (XI) comprising comonomer units derived from propylene, comonomer units derived from ethylene in a content in the range of from 5.0 to 40.0 wt.-% and comonomer units derived from 1-butene in a content in the range of from 1.0 to 10.0 wt.-%; and

II) 5 to 45 wt.-%, based on the total weight of the polyolefin composition and determined at 25 °C according to ISO16152, of a xylene soluble fraction (XS) comprising comonomer units derived from propylene, comonomer units derived from ethylene in a content in the range of from 20.0 to 60.0 wt.-% and optionally comonomer units derived from 1-butene, and the xylene soluble fraction (XS) having an intrinsic viscosity IV, determined according to ISO 1628-1 & 3, in the range of from 1.2 to 3.0 dl/g; and

wherein the polyolefin composition has at least two melting temperatures, determined according to differential scanning calorimetry (DSC) described herein, a first melting temperature $T_{m1}$ in the range of from 150 to 167 °C and a second melting temperature $T_{m2}$ in the range of from 90 to 125 °C; and

a melt flow rate $MFR_2$ (230 °C), determined according to ISO1133, in the range of from 20 to 80 g/10 min.

Further, it has been found that the above-described object is achieved by a process for the preparation of the polyolefin composition according to the present invention, wherein the process comprises preparing the heterophasic polypropylene composition by a multi-stage polymerization process and blending the heterophasic polypropylene composition with the ethylene homopolymer (C) to obtain the polyolefin composition.

It has also been found that the above-described object can be achieved by an article, preferably a film or a molded article, comprising the polyolefin composition, as well as use of the polyolefin composition for the manufacture of the respective article.

**Description of the invention**

The present invention relates to a polyolefin composition comprising a xylene insoluble fraction (XI) comprising comonomer units derived from propylene, ethylene and 1-butene, and a xylene soluble fraction (XS) comprising comonomer units derived from propylene, ethylene and optionally 1-butene. It is preferably prepared from a heterophasic polypropylene composition and an ethylene homopolymer (C). The present invention also relates to a process of preparation of the polyolefin composition.

*Polyolefin composition*

The term *'polyolefin composition'* generally describes a composition comprising at least one polyolefin polymer. The term *'polyolefin polymer'* denotes a polymer comprising or consisting of monomer units selected from ethylene, propylene and alpha-olefin units comprising 4 to 12 carbon atoms.

The wording *'alpha-olefin'* units (e.g., propylene, ethylene, 1-butene units etc.) used herein for contents of the polymer is to be understood to teach these units for preparing the polymer. The resultant polymer contains the respective units derived from these alpha-olefin monomer units.

The polyolefin composition according to the present invention may be prepared from a heterophasic polypropylene composition and an ethylene homopolymer (C) and thus may comprise these polymers. In one embodiment, the polyolefin composition comprises at least a heterophasic polypropylene composition and ethylene homopolymer (C). The polyolefin composition may comprise further components, such as e.g., further polyolefin or non-polyolefin polymers. Preferably, the polyolefin composition does not comprise non-polyolefin polymers.

According to the invention, the polyolefin composition comprises from 55 to 95 wt.-%, preferably from 70 to 93 wt.-% and more preferably from 75 to 90 wt.-%, based on the total weight of the polyolefin composition and determined at 25 °C according to ISO16152, of a xylene insoluble fraction (XI), and from 5 to 45 wt.-%, preferably from 7 to 30 wt.-% and more preferably from 10 to 25 wt.-%, based on the total weight of the polyolefin composition and determined at 25 °C according to ISO16152, of a xylene soluble fraction (XS).

The 1-butene content in the xylene insoluble fraction (XI) of the polyolefin composition is in the range of from 1.0 to 10.0 wt.-%, preferably from 1.1 to 8.0 wt.-%, and more preferably from 1.2 to 5.0 wt.-%.

The ethylene content in the xylene insoluble fraction (XI) of the polyolefin composition is in the range of from 5.0 to 40.0 wt.-%, more preferably from 8.0 to 35.0 wt.-%, and even more preferably from 10.0 to 30.0 wt.-%. All contents are based on the total weight of the xylene insoluble fraction (XI).

The 1-butene content in the xylene soluble fraction (XS) of the polyolefin composition is preferably in the range of from 0 to 3.0 wt.-%. If 1-butene is present, its content is preferably in the range of from 0.1 to 3.0 wt.-%, more preferably from 0.3 to 2.5 wt.-%, and even more preferably from 0.5 to 2.0 wt.-%. In a preferred embodiment, 1-butene is not present in the xylene soluble fraction (XS) of the polyolefin composition.

The ethylene content in the xylene soluble fraction (XS) of the polyolefin composition is preferably in the range of from 20 to 60 wt.-%, more preferably from 22 to 50 wt.-%, and even more preferably from 25 to 45 wt.-%. All contents are based on the total weight of the xylene soluble fraction (XS).

The comonomer contents in the polyolefin composition, the xylene soluble fraction (XS) and the xylene insoluble fraction (XI) are determined according to NMR spectroscopy, as described in the method section herein.

The xylene soluble fraction (XS) has an intrinsic viscosity IV, determined according to ISO1628-1 & 3, in the range of from 1.2 to 3.0 dl/g, preferably from 1.3 to 2.7 dl/g, more preferably from 1.4 to 2.5 dl/g, and even more preferably from 1.7 to 2.1 dl/g.

The polyolefin composition comprises at least propylene, 1-butene and ethylene comonomer units, i.e., being at least a terpolymer composition. The 1-butene content in the polyolefin composition is preferably in the range of from 0.5 to 5.0 wt.-%, more preferably from 0.6 to 4.5 wt.-%, and even more preferably from 0.7 to 4.0 wt.-%. The ethylene content in the polyolefin composition is preferably in the range of from 10.0 to 40.0 wt.-%, more preferably from 12.0 to 35.0 wt.-%, and even more preferably from 15.0 to 30.0 wt.-%. All contents are based on the total weight of the polyolefin composition.

In one preferred embodiment, the xylene insoluble fraction (XI) comprises a propylene copolymer (A) of propylene with 1-butene comonomer units in a content in the range of from 1.0 to 10.0 wt.-% and optionally with ethylene comonomer units in a content in the range of from 0 to 6.0 wt.-%. Preferably, the propylene copolymer (A) has a melt flow rate $MFR_2$ (230 °C), determined according to ISO1133, in the range of from 30 to 400 g/10 min. The propylene copolymer (A) is preferably prepared using a Ziegler-Natta catalyst.

The xylene insoluble fraction (XI) preferably also comprises an ethylene homopolymer (C). Preferably, the ethylene homopolymer (C) has a melt flow rate $MFR_2$ (190 °C), determined according to ISO1133, in the range of from 4 to 100 g/10 min and a density, determined according to ISO1183, in the range of from 910 to 940 kg/m$^2$.

The xylene soluble fraction (XS) preferably comprises a propylene ethylene elastomer (B) having an ethylene content in the range of from 20 to 60 wt.-%, and optionally comprising 1-butene comonomer units. The propylene ethylene elastomer (B) is preferably prepared using a Ziegler-Natta catalyst.

The embodiments of the polymers (A), (B) and (C) are described in detail below.

The polyolefin composition may be prepared from a heterophasic polypropylene composition comprising propylene copolymer (A) and propylene ethylene elastomer (B), and an ethylene homopolymer (C).

In a preferred embodiment, the polyolefin composition comprises a heterophasic polypropylene composition and an ethylene homopolymer (C), in any of the embodiments as described below.

The polyolefin composition preferably comprises from 75 to 95 wt.-%, preferably from 80 to 90 wt.-%, based on the total weight of the polyolefin composition, of a heterophasic polypropylene composition and from 5 to 25 wt.-%, preferably from 10 to 20 wt.-%, based on the total weight of the polyolefin composition, of an ethylene homopolymer (C). In a particular embodiment, the polyolefin composition consists of these two components in the identified contents and further optional polymer additives (preferably in the range of up to 5 wt.-% based on the total weight of the polyolefin composition).

Unless otherwise indicated, percentages throughout this disclosure are percentages by weight (wt.-%) based on the total weight of the respectively described enclosing entity.

In one preferred embodiment, the polyolefin composition is a blend of the heterophasic polypropylene composition and the ethylene homopolymer (C), preferably in the above-identified contents. Blending may be performed by any method known in the art for polymer blending.

The polyolefin composition has a medium to high flowability. The polyolefin composition has a melt flow rate $MFR_2$ (230 °C), determined according to ISO1133, in the range of from 20 to 80 g/10 min, preferably from 25 to 70 g/10 min, and more preferably from 30 to 60 g/10 min.

The polyolefin composition has at least two melting temperatures, a first melting temperature $T_{m1}$ and a second melting temperature $T_{m2}$. The first melting temperature $T_{m1}$ is in the range of from 150 to 167 °C, preferably from 155 to 166 °C, and more preferably from 156 to 165 °C. The respective first melt enthalpy $H_{m1}$ is preferably in the range of from 60 to 95 J/g, more preferably from 63 to 90 J/g and even more preferably from 65 to 85 J/g.

The second melting temperature $T_{m2}$ is in the range of from 90 to 125 °C, preferably from 93 to 120 °C, and more preferably from 95 to 110 °C. The respective second melt enthalpy $H_{m2}$ is preferably in the range of from 5 to 50 J/g, more preferably from 10 to 40 J/g and even more preferably from 15 to 35 J/g.

The melting temperatures and the melt enthalpies are determined according to differential scanning calorimetry (DSC) described herein. Throughout this disclosure, the melting temperatures are understood as the temperature peaks obtained from the DSC analysis.

Preferably, the polyolefin composition has a crystallization temperature $T_c$, determined according to differential scanning calorimetry (DSC) described herein, in the range of from 105 to 140 °C, more preferably from 110 to 138 °C and even more preferably from 115 to 135 °C. The crystallization temperature $T_c$ is preferably at least 105 °C and/or at most 140 °C.

The polyolefin composition has an excellent stiffness. Preferably, the polyolefin composition has a flexural modulus, determined according to ISO178, of more than 950 MPa, and preferably in the range of from more than 950 to 1500 MPa, more preferably from 970 to 1450 MPa, and even more preferably from 1000 to 1400 MPa. The flexural modulus is preferably at least more than 950 MPa and/or at most 1500 MPa.

The polyolefin composition has excellent impact properties. Preferably, the polyolefin composition has an impact strength at +23 °C, determined according to ISO179/1eA, in the range of from 4.0 to 15.0 kJ/m$^2$, more preferably from 4.5 to 14.0 kJ/m$^2$, and even more preferably from 5.0 to 12.0 kJ/m$^2$. The impact strength at +23 °C is preferably at least 4.0 kJ/m$^2$ and/or at most 15.0 kJ/m$^2$.

Preferably, the polyolefin composition has an impact strength at -20 °C, determined according to ISO179/1eA, in the range of from 1.8 to 10.0 kJ/m$^2$, more preferably from 1.9 to 9.0 kJ/m$^2$, and even more preferably from 2.0 to 8.0 kJ/m$^2$. The impact strength at -20 °C is preferably at least 1.8 kJ/m$^2$ and/or at most 10.0 kJ/m$^2$.

The polyolefin composition has good optical properties. The polyolefin composition preferably has a haze value, determined according to ASTM1003 on 60x60x1 mm$^3$ plaques, of less than 70 %, more preferably less than 68 % and even more preferably less than 65 %. Preferably, the haze value is at least 30 %.

The polyolefin composition preferably has an opto-mechanical ability at -20 °C (OMA (-20 °C)) of more than 35 kJMPa/m$^2$, more preferably of more than 40 kJMPa/m$^2$, even more preferably of more than 45 kJMPa/m$^2$. Preferably, the polyolefin composition has an opto-mechanical ability at -20 °C (OMA (-20 °C)) of not more than 100 kJMPa/m$^2$, more preferably of not more than 90 kJMPa/m$^2$. The opto-mechanical ability is determined as described in the method section herein.

### Heterophasic polypropylene composition

The polyolefin composition according to the present invention may be prepared from and preferably comprises a heterophasic polypropylene composition. The heterophasic polypropylene composition preferably comprises or consists of a propylene copolymer (A) and a propylene ethylene elastomer (B).

The term 'heterophasic polypropylene composition' as used herein means that at least two distinct phases are present in the composition, i.e., a propylene copolymer (A) and a propylene ethylene elastomer (B). The propylene copolymer (A) forms a crystalline matrix of the heterophasic polypropylene composition and the propylene ethylene elastomer (B) is dispersed in the crystalline matrix. Presence of the distinct phases is easily detectable via DSC analysis: the crystalline matrix propylene copolymer (A) will show a melting temperature higher than that of the propylene ethylene elastomer (B).

The term 'propylene copolymer' as used herein denotes a polymer comprising, based on to the total weight of the polymer, at least 50 wt.-% of propylene monomer units and further alpha-olefin comonomer units different from propylene.

The heterophasic polypropylene composition may comprise from 55 to 90 wt.-%, preferably from 60 to 90 wt.-%, and more preferably from 65 to 89 wt.-%, based on the total weight of the heterophasic polypropylene composition, of a propylene copolymer (A).

The heterophasic polypropylene composition may comprise from 10 to 45 wt.-%, preferably from 10 to 40 wt.-%, and more preferably from 11 to 35 wt.-%, based on the total weight of the heterophasic polypropylene composition, of a propylene ethylene elastomer (B).

The heterophasic polypropylene composition may comprise from 55 to 90 wt.-%, preferably from 60 to 90 wt.-%, and more preferably from 65 to 89 wt.-%, based on the total weight of the heterophasic polypropylene composition and determined at 25 °C according to ISO16152, of a xylene insoluble fraction (XI).

The heterophasic polypropylene may composition comprise from 10 to 45 wt.-%, preferably from 10 to 40 wt.-%, and more preferably from 11 to 35 wt.-%, based on the total weight of the heterophasic polypropylene composition and determined at 25 °C according to ISO16152, of xylene soluble fraction (XS).

Preferably, the xylene insoluble fraction (XI) of the heterophasic polypropylene composition comprises at least 80 wt.-%, more preferably at least 95 wt.-% and up to 100 wt.-% of a propylene copolymer (A), based on the total weight of the xylene insoluble fraction (XI).

Preferably, the xylene soluble fraction (XS) of the heterophasic polypropylene composition comprises at least 80 wt.-%, more preferably at least 95 wt.-% and up to 100 wt.-% of a propylene ethylene elastomer (B), based on the total weight of the xylene soluble fraction (XS).

The heterophasic polypropylene composition preferably has a melting temperature $T_m$, determined according to differential scanning calorimetry (DSC) described herein, in the range of from 150 to 167 °C, preferably from 155 to 166 °C, and more preferably from 156 to 165 °C.

The heterophasic polypropylene composition may be obtained or obtainable by a polymerization process using a Ziegler-Natta catalyst. Preferably, the heterophasic polypropylene composition is produced using a Ziegler-Natta catalyst according to the preferred embodiments as described with respect to the preparation of the heterophasic polypropylene composition herein. At least one polymer selected from propylene copolymer (A), one of the factions (A1) and (A2) of propylene copolymer (A), and propylene ethylene elastomer (B), is prepared in the presence of a Ziegler-Natta catalyst. Preferably, all these polymers are prepared in the presence of a Ziegler-Natta catalyst.

The heterophasic polypropylene composition is at least a terpolymer comprising propylene and 1-butene and ethylene comonomer units. The 1-butene content in the heterophasic polypropylene composition is preferably in the range of from 0.5 to 5.0 wt.-%, more preferably from 0.6 to 4.5 wt.-%, and even more preferably from 0.7 to 4.0 wt.-%. The ethylene content in the heterophasic polypropylene composition is preferably in the range of from 1.0 to 20.0 wt.-%, more preferably from 3.0 to 15.0 wt.-%, and even more preferably from 5.0 to 13.0 wt.-%. All contents are based on the total weight of the heterophasic polypropylene composition.

The 1-butene content in the xylene insoluble fraction (XI) of the heterophasic polypropylene composition is preferably in the range of from 1.0 to 10.0 wt.-%, more preferably from 1.2 to 8.0 wt.-%, and even more preferably from 1.5 to 5.0 wt.-%. The ethylene content in the xylene insoluble fraction (XI) of the heterophasic polypropylene composition is preferably in the range of from 0.1 to 6.0 wt.-%, more preferably from 0.5 to 5.5 wt.-%, and even more preferably from 1.0 to 5.0 wt.-%. All contents are based on the total weight of the xylene insoluble fraction (XI).

The 1-butene content in the xylene soluble fraction (XS) of the heterophasic polypropylene composition is preferably in the range of from 0 to 5.0 wt.-%. If 1-butene is present, its content is preferably in the range of from 0.1 to 5.0 wt.-%, more preferably from 0.5 to 4.5 wt.-%, and even more preferably from 1.0 to 4.0 wt.-%. In a preferred embodiment, 1-butene is not present in the xylene soluble fraction (XS) of the heterophasic polypropylene composition. The ethylene content in the xylene soluble fraction (XS) of the heterophasic polypropylene composition is preferably in the range of from 20 to 60 wt.-%, more preferably from 22 to 50 wt.-%, and even more preferably from 25 to 45 wt.-%. All contents are based on the total weight of the xylene soluble fraction (XS).

The comonomer contents in the heterophasic polypropylene composition, the xylene soluble fraction (XS) and xylene insoluble fraction (XI) and in the propylene copolymers are determined according to NMR spectroscopy, as described in the method section herein.

Preferably, propylene, 1-butene and ethylene are the only comonomers present in the heterophasic polypropylene composition. It is preferred that the heterophasic polypropylene composition is substantially free of units derived from other alpha-olefin monomers (i.e., $C_5$ to $C_8$ alpha-olefin monomers), e.g., it comprises less than 0.1 wt.-%, preferably less than 0.05 wt.-%, and more preferably less than 0.01 wt.-% of other alpha-olefin monomers such as $C_5$ to $C_8$ alpha-olefin monomer units.

The xylene soluble fraction (XS) of the heterophasic polypropylene composition preferably has an intrinsic viscosity IV, determined according to ISO1628-1 & 3, in the range of from 1.2 to 3.0 dl/g, preferably from 1.3 to 2.7 dl/g, more preferably from 1.4 to 2.5 dl/g, and even more preferably from 1.7 to 2.1 dl/g.

Preferably, the propylene copolymer (A) and the propylene ethylene elastomer (B) are the sole polymer components in the heterophasic polypropylene composition. However, it is to be understood herein that the heterophasic polypropylene composition may comprise further components such as additives, which may optionally be added in a mixture with or without a carrier polymer (e.g., in a baster batch).

Suitable additives include fillers, lubricants, processing aids, antioxidants, UV absorbers, light stabilizers, nucleating agents, foaming or blowing agents, clarifiers and pigments.

The additives may be present in the heterophasic polypropylene composition in contents in the range of from 0.1 to 10.0 wt.-%, preferably from 0.3 to 5.0 wt.-%, more preferably from 0.5 to 3.0 wt.-%, based on the total weight of the heterophasic polypropylene composition.

### Propylene copolymer (A)

The propylene copolymer (A) is a copolymer of propylene with 1-butene as comonomer. The content of 1-butene comonomer units in the propylene copolymer (A) is preferably in the range of from 1.0 to 10.0 wt.-%, preferably from 1.2 to 8.0 wt.-%, and more preferably from 1.5 to 5.0 wt.-%.

The propylene copolymer (A) may comprise ethylene as further comonomer. The content of ethylene comonomer units in the propylene copolymer (A) is preferably in the range of from 0 to 6.0 wt.-%. If ethylene is present, its content is preferably in the range of from 0.1 to 6.0 wt.-%, more preferably from 0.5 to 5.5 wt.-%, and even more preferably from 1.0 to 5.0 wt.-%.

Preferably, propylene and 1-butene and optionally ethylene are the only comonomers present in the propylene copolymer (A). It is preferred that the propylene copolymer (A) is substantially free of units derived from other alpha-olefin monomers (i.e., $C_5$ to $C_8$ alpha-olefin monomers), e.g., it comprises less than 0.1 wt.-%, preferably less than 0.05 wt.-%, and more preferably less than 0.01 wt.-% of other alpha-olefin monomers such as $C_5$ to $C_8$ alpha-olefin monomer units.

The propylene copolymer (A) is preferably obtainable or obtained by a polymerization process using a Ziegler-Natta catalyst. Preferably, the propylene copolymer (A) is produced using a Ziegler-Natta catalyst according to the preferred embodiments as described with respect to the preparation of the heterophasic polypropylene composition herein.

The propylene copolymer (A) preferably has a melt flow rate $MFR_2$ (230 °C), determined according to ISO1133, in the range of from 30 to 400 g/10 min, preferably from 40 to 300 g/10 min, and more preferably from 50 to 200 g/10 min.

The propylene copolymer (A) composition preferably has a melting temperature $T_m$, determined according to differential scanning calorimetry (DSC) described herein, in the range of from 150 to 167 °C, preferably from 155 to 166 °C, and more preferably from 156 to 165 °C.

Preferably, the propylene copolymer (A) has a molecular weight distribution $M_w/M_n$, being the ratio of the weight average molecular weight $M_w$ and the number average molecular weight $M_n$, in the range of from 3.0 to 20.0, more preferably from 4.0 to 15.0, and most preferably from 5.5 to 9.0.

Preferably, the propylene copolymer (A) has a xylene soluble fraction (XS), determined at 25 °C according to ISO16152, in the range of from 1.0 to 8.0 wt.-%, more preferably from 1.2 to 7.5 wt.-%, and even more preferably from 1.5 to 7.0 wt.-%. The xylene soluble fraction (XS) preferably amounts to at most 8.0 wt.-% of the propylene copolymer (A).

The propylene copolymer (A) is preferably a multimodal polymer. The term 'multimodal polymer" as used herein denotes a polymer composition comprising at least two polymer fractions, which have been produced under different polymerization conditions resulting in different (weight average) molecular weights and/or molecular weight distributions for the fractions and/or different comonomer contents. The prefix 'multi' relates to the number of different polymer fractions the polymer consists of. The term 'multimodal polymer" comprises bimodal, trimodal, tetramodal etc. polymers.

More preferably, the propylene copolymer (A) is a bimodal polymer, i.e., it consists of two different polymer fractions, e.g., a first propylene polymer fraction (A1) and a second propylene polymer fraction (A2), each comprising a propylene polymer. The two fractions are different from each other.

In a particular embodiment, the propylene copolymer (A) comprises, or consists of, a first propylene polymer fraction (A1) being a propylene homopolymer or a propylene copolymer of propylene with 1-butene comonomer units and/or ethylene comonomer units, preferably being a propylene homopolymer or a propylene copolymer having less than 1 wt.-% of comonomer units, based on the total weight of the first propylene polymer fraction (A1); and a second propylene polymer fraction (A2), being a propylene copolymer of propylene with 1-butene comonomer units and optionally ethylene comonomer units. Embodiments of the first and second propylene polymer fraction (A1) and (A2) are described below.

Preferably, the propylene copolymer (A) comprises, or consists of, from 25 to 75 wt.-%, based on the total weight of the propylene copolymer (A), of a first propylene polymer fraction (A1); and from 75 to 25 wt.-%, based on the total weight of the propylene copolymer (A), of a second propylene polymer fraction (A2).

In other words, the weight ratio of first propylene polymer fraction (A1) to the second propylene polymer fraction (A2) in the propylene copolymer (A) is preferably in the range of from 25:75 to 75:25, more preferably from 30:70 to 70:30, most preferably from 35:65 to 65:35.

### First propylene polymer fraction (A1)

The first propylene polymer fraction (A1) preferably consists of a single propylene polymer. The propylene polymer of the first propylene polymer fraction (A1) may be a propylene homopolymer or a propylene copolymer. If the propylene polymer of the first propylene polymer fraction (A1) is a propylene copolymer, it is copolymer of propylene with 1-butene comonomer units and/or ethylene comonomer units, preferably with ethylene comonomer units. In a preferred embodiment, the propylene polymer of the first propylene polymer fraction (A1) is a propylene homopolymer or a propylene copolymer having less than 1 wt.-% of comonomer units, based on the total weight of the first propylene polymer fraction (A1).

The first propylene polymer fraction (A1) is preferably obtainable or obtained by a polymerization process using a Ziegler-Natta catalyst. Preferably, the first propylene polymer fraction (A1) is produced using a Ziegler-Natta catalyst according to the preferred embodiments as described with respect to the preparation of the heterophasic polypropylene composition herein.

Preferably, the first propylene polymer fraction (A1) has a melt flow rate $MFR_2$ (230 °C), determined according to ISO1133, in the range of from 30 to 400 g/10 min, more preferably from 40 to 300 g/10 min, and even more preferably from 50 to 200 g/10 min.

Preferably, the first propylene polymer fraction (A1) has a xylene soluble fraction (XS), determined at 25 °C according to ISO16152, in the range of from 1.0 to 8.0 wt.-%, more preferably from 1.2 to 7.5 wt.-%, and even more preferably from 1.5 to 7.0 wt.-%. The xylene soluble fraction (XS) preferably amounts to at most 8.0 wt.-% of the first propylene polymer fraction (A1).

Preferably, the first propylene polymer fraction (A1) is present in the propylene copolymer (A), based on the total weight of the propylene copolymer (A), in an amount of from 25 to 75 wt.-%, preferably from 30 to 70 wt.-%, and more preferably from 35 to 65 wt.-%.

### Second propylene polymer fraction (A2)

The second propylene polymer fraction (A2) is different from the first propylene polymer fraction (A1). The second propylene polymer fraction (A2) may differ from the first propylene polymer fraction (A1) in the amount and/or quality of the comonomer.

The second propylene polymer fraction (A2) preferably consists of a single propylene polymer. The propylene polymer of the second propylene polymer fraction (A2) preferably is a propylene copolymer of propylene with 1-butene comonomer units and optionally ethylene comonomer units. In one particularly preferred embodiment, the propylene polymer of the second propylene polymer fraction (A2) is a propylene copolymer of propylene with 1-butene comonomer units. In another particular embodiment, the propylene polymer of the second propylene polymer fraction (A2) is a propylene copolymer of propylene with 1-butene comonomer units and ethylene comonomer units.

The second propylene polymer fraction (A2) may be produced in the presence of the preceding first polymer fraction (A1), forming together the propylene copolymer (A). If so, then the properties of the second propylene polymer fraction (A2) are not directly determinable, but are calculated based on the values for the propylene copolymer (A) and the first polymer fraction (A1).

The content of 1-butene comonomer units in the second propylene polymer fraction (A2) is preferably in the range of from 2.0 to 15.0 wt.-%, preferably from 3.0 to 13.0 wt.-%, and more preferably from 4.0 to 11.0 wt.-%.

The second propylene polymer fraction (A2) is preferably obtainable or obtained by a polymerization process using a Ziegler-Natta catalyst. Preferably, the second propylene polymer fraction (A2) is produced using a Ziegler-Natta catalyst according to the preferred embodiments as described with respect to the preparation of the heterophasic polypropylene composition herein.

Preferably, the second propylene polymer fraction (A2) has a melt flow rate $MFR_2$ (230 °C), determined according to ISO1133, in the range of from 30 to 400 g/10 min, more preferably from 40 to 300 g/10 min, and even more preferably from 50 to 200 g/10 min.

The $MFR_2$ of the second propylene polymer fraction (A2) is determined according to equation (1) as described with respect to the preparation of the heterophasic polypropylene composition herein.

Preferably, the second propylene polymer fraction (A2) has a xylene soluble fraction (XS), determined at 25 °C according to ISO16152, in the range of from 1.0 to 8.0 wt.-%, more preferably from 1.2 to 7.5 wt.-%, and even more preferably from 1.5 to 7.0 wt.-%. The xylene soluble fraction (XS) preferably amounts to at most 8.0 wt.-% of the second propylene polymer fraction (A2).

The xylene soluble fraction (XS) of the second propylene polymer fraction (A2) is determined according to equation (2) as described with respect to the preparation of the heterophasic polypropylene composition herein.

Preferably, the second propylene polymer fraction (A2) is present in the propylene copolymer (A), based on the total weight of the propylene copolymer (A), in an amount of from 25 to 75 wt.-%, preferably from 30 to 70 wt.-%, and more preferably from 35 to 65 wt.-%.

*Propylene ethylene elastomer (B)*

The propylene ethylene elastomer (B) is a copolymer of propylene and ethylene. The ethylene content in the propylene ethylene elastomer (B), based on the total weight of the propylene ethylene elastomer (B) is in the range of from 20 to 60 wt.-%, more preferably from 22 to 50 wt.-%, and even more preferably from 25 to 45 wt.-%. The ethylene content is determined by NMR spectroscopy, as described in the method section.

The propylene ethylene elastomer (B) may comprise 1-butene comonomer units. The content of 1-butene comonomer units in the propylene ethylene elastomer (B) is preferably in the range of from 0 to 5.0 wt.-%. If 1-butene is present, its content is preferably in the range of from 0.1 to 5.0 wt.-%, more preferably from 0.5 to 4.5 wt.-%, and even more preferably from 1.0 to 4.0 wt.-%. In a preferred embodiment, 1-butene comonomer units are not present in the propylene ethylene elastomer (B).

Preferably, propylene and ethylene and optionally 1-butene are the only comonomers present in the propylene ethylene elastomer (B). It is preferred that propylene ethylene elastomer (B) is substantially free of units derived from other alpha-olefin monomers (i.e., $C_5$ to $C_8$ alpha-olefin monomers), e.g., it comprises less than 0.1 wt.-%, preferably less than 0.05 wt.-%, and more preferably less than 0.01 wt.-% of other alpha-olefin monomers such as $C_5$ to $C_8$ alpha-olefin monomer units.

Preferably, the propylene ethylene elastomer (B) is obtainable or obtained by a polymerization process using a Ziegler-Natta catalyst. More preferably, the propylene ethylene elastomer (B) is produced using a Ziegler-Natta catalyst according to the preferred embodiments as described with respect to the preparation of the heterophasic polypropylene composition herein.

In a preferred embodiment, all polymers of the heterophasic polypropylene composition are obtainable or obtained by polymerization processes using a Ziegler-Natta catalyst.

Preferably, the copolymer of ethylene (B) has a molecular weight distribution $M_w/M_n$, being the ratio of the weight average molecular weight $M_w$ and the number average molecular weight $M_n$, in the range of from 3.0 to 20.0, more preferably from 4.0 to 15.0, and most preferably from 5.5 to 9.0.

*Ethylene homopolymer (C)*

The polyolefin composition according to the present invention may comprise an ethylene homopolymer (C).

The ethylene homopolymer (C) preferably has a melt flow rate $MFR_2$ (190 °C), determined according to ISO1133, in the range of from 4 to 100 g/10 min, preferably from 7 to 80 g/10 min, more preferably from 10 to 50 g/10 min and most preferably from 12 to 25 g/10 min.

The ethylene homopolymer (C) preferably has a density, determined according to ISO1183, in the range of from 910 to 940 $kg/m^2$, preferably from 910 to 930 $kg/m^2$ and more preferably from 912 to 925 $kg/m^2$.

Preferably, the ethylene homopolymer (C) has a melting temperature $T_m$, determined according to differential scanning calorimetry (DSC) described herein, in the range of from 90 to 125 °C, more preferably from 93 to 120 °C, and still more preferably from 95 to 110 °C.

Preferably, the ethylene homopolymer (C) has a g' factor (80-100% cum) in the range of from 0.10 to 0. 90, more preferably from 0.10 to 0. 60 and even more preferably from 0.10 to 0.45. The g' factor is a long chain branching (LCB) index and it is measured as described in the method section herein.

Preferably, the ethylene homopolymer (C) is a low-density polyethylene (LDPE). LDPEs are well known in the art and are produced in high pressure processes usually performed in a tubular reactor or an autoclave.

As the ethylene homopolymer (C), the polyethylene CA9150 produced by Borealis may be used.

### Preparation of the polyolefin composition

The polyolefin composition according to the present invention may be prepared by any known process in the art. Preferably, the polyolefin composition is prepared by blending the heterophasic polypropylene composition with the ethylene homopolymer (C).

The present invention also relates to a process for the preparation of the polyolefin composition according to any of the embodiments described above, wherein the process comprises preparing the heterophasic polypropylene composition by a multi-stage polymerization process and blending the heterophasic polypropylene composition with the ethylene homopolymer (C) to obtain the polyolefin composition.

Blending may be performed by any method known in the art for polymer blending. Preferably, blending is performed in a molten state, more preferably by extrusion.

### Preparation of the heterophasic polypropylene composition

The heterophasic polypropylene composition in the polyolefin composition according to the present invention may be prepared by any known process in the art. Ideally, a process is used which produces a homogenous mixture of the various components. Typically, compounding is employed. Compounding usually involves mixing or/and blending the various components in a molten state, often by extrusion.

Preferably, the heterophasic polypropylene composition is produced in a multi-stage process wherein the propylene polymers are produced in subsequent stages.

In a preferred embodiment, the heterophasic polypropylene composition is prepared by a multi-stage polymerization process. Preferably, the process comprises

a) preparing a first propylene polymer fraction (A1) being a propylene homopolymer or a propylene copolymer of propylene with 1-butene comonomer units and/or ethylene comonomer units in a bulk phase reactor, preferably a loop reactor, in a first polymerization stage in the presence of a Ziegler-Natta catalyst;

b) transferring the first propylene polymer fraction (A1) to a second polymerization stage, and preparing a second propylene polymer fraction (A2) being a propylene copolymer of propylene with 1-butene comonomer units and optionally ethylene comonomer units in the presence of a Ziegler-Natta catalyst in a first gas phase reactor (GPR1); and

wherein the first propylene polymer fraction (A1) and the second propylene polymer fraction (A2) together form a propylene copolymer (A) of propylene with 1-butene comonomer units in a content in the range of from 1.0 to 10.0 wt.-% and optionally ethylene comonomer units in a content in the range of from 0 to 6.0 wt.-%, preferably having a melt flow rate $MFR_2$ (230 °C), determined according to ISO1133, in the range of from 30 to 400 g/10 min;

c) transferring the propylene copolymer (A) to a third polymerization stage and, preferably in the presence of a Ziegler-Natta catalyst, preparing a propylene ethylene elastomer (B) having an ethylene content in the range of from 20 to 60 wt.-%, and optionally comprising 1-butene comonomer units, in a second gas phase reactor (GPR2); to obtain a heterophasic polypropylene composition.

The heterophasic polypropylene composition preferably has a melt flow rate $MFR_2$ (230 °C), determined according to ISO1133, in the range of from 10 to 100 g/10 min, and a melting temperature $T_m$, determined according to ISO11357-3, in the range of from 150 to 167 °C.

The process may lead to a heterophasic polypropylene composition in any of the above-described embodiments.

Accordingly, in step a) of the process, propylene and optionally 1-butene and/or ethylene is fed into the bulk phase reactor. In step b) of the process, propylene, 1-butene and optionally ethylene are fed into the first gas phase reactor, where the first propylene polymer fraction (A1) has been placed. To the so produced propylene copolymer (A), propylene, ethylene and optionally 1-butene are added in a second gas phase reactor to obtain the final propylene polymer in step c) of the process.

Thus, preferably, the propylene copolymer (A) is produced in a multi-stage process wherein the propylene polymer fractions (A1) and (A2) are produced in subsequent stages.

The properties of the second propylene polymer fraction (A2) produced in a higher stage of the multi-stage process may be calculated as follows.

The $MFR_2$ of the second propylene polymer fraction (A2), produced in the second reactor is determined according to equation (1):

$$\log(MFR\ (A2)) = \frac{\log(MFR\ (A)) - w(A1)*\log(MFR(A1))}{w(A2)} \quad \text{equation (1)}$$

wherein

$MFR(A)$ is the $MFR_2$ of the propylene copolymer (A)
$w(A1)$ and $w(A2)$ are the weight fractions of the propylene polymer fractions (A1) and (A2) in the propylene copolymer (A)
$MFR(A1)$ is the $MFR_2$ of the propylene polymer fraction (A1) produced in the first reactor.

The xylene soluble content of the second propylene polymer fraction (A2), produced in the second reactor is determined according to equation (2):

$$XS(A2) = \frac{XS(A) - w(A1)*XS(A1)}{w(A2)} \text{equation (2)}$$

wherein

$XS(A)$ is the xylene soluble content of the propylene copolymer (A)
$w(A1)$ and $w(A2)$ are the weight fractions of the propylene polymer fractions (A1) and (A2) in the propylene copolymer (A)
$XS(A1)$ is the xylene soluble content of the propylene polymer fraction (A1) produced in the first reactor.

Respectively adapted equations may be used to determine the parameters of the second propylene polymer fraction (A2) or of polymers prepared in further stages of the process.

Thus, although not directly measurable on the multi-stage process products, the properties of the polymers produced in higher stages of such multi-stage processes may be determined by applying the above method.

Generally, polymers produced in a multi-stage process are also designated as *'in-situ'* blends. The resulting end product consists of an intimate mixture of the polymers from the two or more reactors. These two polymers may have different molecular weight distribution curves, and/or they may differ in terms of comonomer content or type. The end product thus contains a mixture or two or more polymers with differing properties, i.e., it is a multimodal polymer mixture.

The first polymerization stage for producing the first propylene polymer fraction (A1) is preferably a slurry polymerization step. The slurry polymerization usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the first polymerization stages is typically from 60 to 100 °C, preferably from 70 to 90 °C. An excessively high temperature should be avoided to prevent partial dissolution of the polymer into the diluent and the fouling of the reactor. The pressure is typically from 1 to 150 bar, preferably from 40 to 80 bar.

The slurry polymerization may be conducted in any known reactor used for slurry polymerization, such as any bulk phase reactor. Such reactors include a continuous stirred tank reactor and a loop reactor. It is especially preferred to conduct the polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the propylene copolymer (A). The amount of hydrogen needed to reach the desired $MFR_2$ depends on the catalyst used and the polymerization conditions, as will be appreciated by the skilled worker.

The average residence time in the first polymerization stage is typically from 20 to 120 minutes, preferably from 30 to 80 minutes. As it is well known in the art the average residence time $\tau$ can be calculated from equation (3) below:

$$\tau = \frac{V_R}{Q_o} \qquad \text{equation (3)}$$

wherein

$V_R$ is the volume of the reaction space (in case of a loop reactor, the volume of the reactor, in case of the fluidized bed reactor, the volume of the fluidized bed)

$Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the propylene feed rate.

The first propylene polymer fraction (A1) is transferred to the second polymerization stage for producing the second propylene polymer fraction (A2), preferably a gas phase polymerization step, i.e., carried out in a first gas-phase reactor (GPR1). Any suitable gas phase reactor known in the art may be used, such as a fluidized bed gas phase reactor.

For gas phase reactors, the reaction temperature used will generally be in the range 60 to 115 °C (e.g. 70 to 110 °C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer.

A chain transfer agent (e.g., hydrogen) is typically added to the second polymerization stage.

The split between the first and second polymerization fractions may be in the range of from 25:75 to 75:25, more preferably from 30:70 to 70:30, most preferably from 35:65 to 65:35.

In the first gas-phase reactor (GPR1), a mixture of the first propylene polymer fraction (A1) and the second propylene polymer fraction (A2) is formed being the propylene copolymer (A).

The propylene copolymer (A) is transferred to the third polymerization stage for producing the propylene ethylene elastomer (B), preferably a gas phase polymerization step, i.e., carried out in a second gas-phase reactor (GPR2). Any suitable gas phase reactor known in the art may be used, such as a fluidized bed gas phase reactor. The condition range described above for the first gas phase reactor are similarly used for the second gas phase reactor.

The split between the propylene copolymer (A) fraction and the propylene ethylene elastomer (B) fraction may be in the range of from 90:10 to 55:45. The resultant polymer is the heterophasic polypropylene composition.

A preferred multistage process is the above-identified slurry-gas phase process, such as developed by Borealis and known as the Borstar® technology. In this respect, reference is made to the EP applications EP-A-0887379 and EP-A-0517868.

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is typically conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerization step is typically from 0 to 60 °C, preferably from 10 to 50 °C and more preferably from 15 to 40 °C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. In such cases it is necessary to introduce as much cocatalyst into the prepolymerization stage that a sufficient polymerization reaction is obtained therein.

It is understood within the scope of the invention, that the amount of polymer produced in the prepolymerization typically lies within 1.0 to 5.0 wt.-%, based on the total weight of the heterophasic propylene composition.

The propylene copolymer (A) is preferably obtained by a polymerization process using a Ziegler-Natta catalyst. Preferably, both the first propylene polymer fraction (A1) and the second propylene polymer fraction (A2) are obtained by a polymerization process using a Ziegler-Natta catalyst. Also preferably, the propylene ethylene elastomer (B) is obtained by a polymerization process using a Ziegler-Natta catalyst. In a preferred embodiment, a Ziegler-Natta catalyst is used in all stages of the polymerization process.

Preferably, the Ziegler-Natta catalyst comprises:

a) compound(s) of a transition metal of Group 4 to 6 of IUPAC;

b) a Group 2 metal compound;

c) an internal donor, wherein said internal donor is a non-phthalic compound, preferably is a non-phthalic acid ester;

d) a co-catalyst; and

e) optionally an external donor.

The internal donor is preferably selected from (di)esters of non-phthalic carboxylic (di)acids, 1,3-diethers, derivatives and mixtures thereof. Most preferred internal donors are (di)esters of citraconic acid.

Preferably, the Ziegler-Natta catalyst does not comprise phthalic acid esters, and the heterophasic polypropylene composition is free of phthalic acid esters and their respective decomposition products. Also preferably, the polyolefin composition is free of phthalic acid esters and their respective decomposition products.

Suitable Ziegler-Natta catalysts for use in the above-described polymerization reactions and preparation thereof are described in EP-A-3562850.

It will be appreciated that the propylene polymers may contain standard polymer additives as described above.

After preparation, the obtained polymer is typically extruded and pelletized. The extrusion may be conducted in the manner generally known in the art, preferably in a twin screw extruder. One example of suitable twin screw extruders is a corotating twin screw extruder. Those are manufactured, among others, by Coperion or Japan Steel Works. Another example is a counter-rotating twin screw extruder. Such extruders are manufactured, among others, by Kobe Steel and Japan Steel Works. Before the extrusion at least part of the desired additives, as mentioned above, are preferably mixed with the polymer. The extruders typically include a melting section where the polymer is melted and a mixing section where the polymer melt is homogenized. Melting and homogenization are achieved by introducing energy into the polymer. Suitable level of specific energy input (SEI) is from about 150 to about 450 kWh/ton polymer, preferably from 175 to 350 kWh/ton.

*Preparation of the ethylene homopolymer (C)*

The ethylene homopolymer (C) may be produced by any method known in the art for producing ethylene homopolymers. Preferably, the ethylene homopolymer (C) is produced in high pressure processes usually performed in a tubular reactor or an autoclave.

As the ethylene homopolymer (C), commercially available ethylene homopolymers with the required properties may be used, such as polyethylene CA9150 produced by Borealis.

### Article and use

The present invention also relates to an article comprising the polyolefin composition according to the invention in any of the above-described embodiments, and to the use of the polyolefin composition for the manufacture of an article. Preferable articles include films and molded articles.

The films may be prepared by any method known in the art, such as casting or extrusion. The films may be multilayer or monolayer films, but are preferably monolayer films. In one embodiment, the films consist of the polyolefin composition as the sole polymer component.

As used herein the term *'molded article'* denotes an article that are produced by any conventional molding technique, e.g., injection molding, stretch molding, compression molding, rotomolding or injection stretch blow molding. Articles produced by injection molding, stretch molding, or injection stretch blow molding are preferred. Articles produced by injection molding are especially preferred. The molded articles preferably are thin-walled articles having a wall thickness of 300 $\mu$m to 2 mm. More preferably, the thin-walled articles have a wall thickness of 300 $\mu$m to 1400 $\mu$m, and even more preferably the thin-walled articles have a wall thickness of 500 $\mu$m to 900 $\mu$m. The molded articles of the present invention can be containers, such as cups, buckets, beakers, trays or parts of such articles, such as see-through-windows, lids, or the like.

The articles according to the invention may be employed in a number of end applications, in particular thin wall packaging applications and food packaging applications. The articles of the current invention are especially suitable for containing food, especially frozen food, such as ice-cream, frozen liquids, sauces, pre-cooked convenience products, and the like.

### Measurement methods

All parameters mentioned in the description of the invention or the examples were measured according to the methods described below.

### Melt Flow Rate

The melt flow rate (MFR) was determined according to ISO1133 and is indicated in g/10 min. The MFR is an indication of the melt viscosity of the polymer. The MFR is determined at 190 °C for PE and 230 °C for PP. The load under which the melt flow rate is determined is usually indicated as a subscript, for instance $MFR_2$ is measured under 2.16 kg load (condition D).

### Density

Density of the polymer was determined according to ISO 1183.

### Description of microstructure quantification by NMR spectroscopy

Quantitative nuclear-magnetic resonance (NMR) spectroscopy was used to quantify the comonomer content of the polymers.

Quantitative $^{13}$C{$^1$H} NMR spectra recorded in the molten-state using a Bruker Avance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3s {pollard04, klimke06} and the RS-HEPT decoupling scheme {fillip05,griffin07}. A total of 1024 (1k) transients were acquired per spectra.

Quantitative $^{13}$C{$^1$H} NMR spectra were processed, integrated and relevant quantitative properties determined from the integrals. All chemical shifts are internally referenced to the methyl isotactic pentad (*mmmm*) at 21.85 ppm and assignments done according {brandolini01, randall89, resconi00}.

Characteristic signals corresponding to the incorporation of 1-butene were observed and the comonomer content quantified in the following way. The amount isolated 1-butene incorporated in PBP sequences was quantified using the integral of the $\alpha$B2 sites at 43.6 ppm accounting for the number of reporting sites per comonomer:

$$B = I_{\alpha B2} / 2$$

If observed the amount consecutively incorporated 1-butene in PBBP sequences was quantified using the integral of the $\alpha\alpha$B2 site at 40.6 ppm accounting for the number of reporting sites per comonomer:

$$BB = 2 * I_{\alpha\alpha B2}$$

In case of presence of consecutively incorporated 1-butene (BB) the isolated incorporated butene (B) needs to be corrected due to influencing signals by subtracting BB/2.

Characteristic signals corresponding to different incorporations of ethylene were observed and the comonomer content quantified utilising following assignments and equations for the respective sequences:

| chemical shift [ppm] | assignment |
|---|---|
| 47.9 - 45.1 | $S\alpha\alpha$ |
| 30.1 | $S\gamma\delta$ |
| 29.7 | $S\delta\delta$ |
| 27.7 -26.5 | $S\beta\delta$ |
| 25.1 -23.9 | $S\beta\beta$ |

| sequence | signal / equation |
|---|---|
| E | $I_{S\beta\beta}$ |
| EE | $I_{S\beta\delta}$ |
| EEE | $I_{(S\delta\delta/2) + (S\gamma\delta/4)}$ |

The amount of P was quantified based on the $S\alpha\alpha$ methylene site including additional propene units not covered by $S\alpha\alpha$:

$$P= I_{S\alpha\alpha} + B + (0.5*BB) + E + (0.5*EE)$$

The total amount of comonomers was then calculated as follows:

$$B_{total} = B + BB \qquad E_{total} = E + EE + EEE \qquad P_{total} = P$$

$$B[mol\%] = 100* B_{total} / (B_{total} + E_{total} + P_{total})$$

$$E[mol\%] = 100* E_{total} / (B_{total} + E_{total} + P_{total})$$

$$P[mol\%] = 100* P_{total} / (B_{total} + E_{total} + P_{total})$$

The weight percent comonomer incorporation was calculated from the mol%:

B [wt%] = 100*(B[mol%]*56.11) / ((E[mol%] *28.05) + (B[mol%] *56.11) + (P[mol%]*42.08))

E [wt%] = 100*(E[mol%]*28.05) / ((E[mol%] *28.05) + (B[mol%] *56.11) + (P[mol%]*42.08))

For e.g. xylene soluble fraction where butene was not observed the related equations collapse to the following:

$$P = I_{s\alpha\alpha} + E + (0.5*EE)$$

The total amount of comonomer was then calculated as follows:

$$E_{total} = E + EE + EEE \qquad P_{total} = P$$

$$E[mol\%] = 100* E_{total} / (E_{total} + P_{total})$$

$$P[mol\%] = 100* P_{total} / (E_{total} + P_{total})$$

The weight percent comonomer incorporation was calculated from the mol%:

E [wt%] = 100*(E[mol%]*28.05) / ((E[mol%] *28.05) + (P[mol%]*42.08))

References:

klimke06: Klimke, K., Parkinson, M., Piel, C., Kaminsky, W., Spiess, H.W., Wilhelm, M., Macromol. Chem. Phys. 2006;207:382.

parkinson07: Parkinson, M., Klimke, K., Spiess, H.W., Wilhelm, M., Macromol. Chem. Phys. 2007;208:2128.

pollard04: Pollard, M., Klimke, K., Graf, R., Spiess, H.W., Wilhelm, M., Sperber, O., Piel, C., Kaminsky, W., Macromolecules 2004;37:813.

filip05: Filip, X., Tripon, C., Filip, C., J. Mag. Resn. 2005, 176, 239

griffin07: Griffin, J.M., Tripon, C., Samoson, A., Filip, C., and Brown, S.P., Mag. Res. in Chem. 2007 45, S1, S198

castignolles09: Castignolles, P., Graf, R., Parkinson, M., Wilhelm, M., Gaborieau, M., Polymer 50 (2009) 2373

resconi00: Resconi, L., Cavallo, L., Fait, A., Piemontesi, F., Chem. Rev. 2000, 100, 1253

randall89: J. Randall, Macromol. Sci., Rev. Macromol. Chem. Phys. 1989, C29, 201.

brandolini01: A.J. Brandolini, D.D. Hills, "NMR spectra of polymers and polymer additives", Marcel Deker Inc., 2000

abis86: L. Abis, Mackromol. Chem. 187, 1877-1886 (1986)

*Molecular weight and molecular weight distribution*

Molecular weight averages ($M_z$, $M_w$ and $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO16014-1:2003, ISO16014-2:2003, ISO16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i \, x \, M_i)}{\sum_{i=1}^{N} A_i} \quad (2)$$

$$M_z = \frac{\sum_{i=1}^{N}(A_i \, x \, M_i^2)}{\sum_{i=1}^{N}(A_i/M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where $N$ is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3× Agilent-PLgel Olexis and 1x Agilent-PLgel Olexis Guard columns was used. As the solvent and mobile phase 1,2,4-trichlorobenzene (TCB) stabilized with 250 mg/L 2,6-Di-tert-butyl-4-methylphenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO16014-2:2003) with 19 narrow MWD polystyrene (PS) standards in the range of 0.5 kg/mol to 11500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \, mL/g, \qquad \alpha_{PS} = 0.655$$

$$K_{PE} = 39 \times 10^{-3} \, mL/g, \qquad \alpha_{PE} = 0.725$$

$$K_{PP} = 19 \times 10^{-3} \, mL/g, \qquad \alpha_{PP} = 0.725$$

A third order polynomial fit was used to fit the calibration data.

All samples were prepared in the concentration range of 0.5 to 1 mg/ml and dissolved at 160 °C for 2.5 hours (PP) or 3 hours (PE) under continuous gentle shaking. This method is particularly used for propylene polymers and polymer blends.

### Molecular weight averages, molecular weight distribution, long chain branching index (Mn, Mw, MWD, g'(80-100) determined by SEC/VISC-LS

A PL 220 (Agilent) GPC equipped with an infra-red detector (IR4 (PolymerChar, Spain), an online four capillary bridge viscometer (PL-BV 400-HT), and a dual light scattering detector (PL-LS 15/90 light scattering detector) with a 15° and 90° angle was used. 3x Olexis and 1x Olexis Guard columns from Agilent as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 μL of sample solution were injected per analysis. All samples were prepared by dissolving 8.0 - 10.0 mg of polymer in 10 mL (at 160 °C) of stabilized TCB (same as mobile phase) for 2,5 hours at 160°C under continuous gentle shaking. The injected concentration of the polymer solution at 160°C ($c_{160°C}$) was determined in the following way.

$$c_{160°C} = \frac{w_{25}}{V_{25}} * 0{,}8772$$

With: $w_{25}$ (polymer weight) and $V_{25}$ (Volume of TCB at 25°C).

GPC-VISC-LS processing

For the GPC light scattering approach ($GPC_{LS}$) the inter detector delay volumes were determined with a narrow PS standard (MWD = 1.01) with a molar mass of 130000 g/mol. The corresponding detector constants for the light scattering detector and the online viscometer were determined with the broad standard NIST1475A (Mw = 52000 g/mol and IV=1,01 dl/g). The corresponding used dn/dc for the used PE standard in TCB was 0,094 $cm^3$/g. The calculation was performed using the Cirrus Multi-Offline SEC-Software Version 3.2 (Agilent).

The molar mass at each elution slice was calculated by using the 15° light scattering angle. Data collection, data processing and calculation were performed using the Cirrus Multi SEC-Software Version 3.2. The molecular weight was calculated using the option in the Cirrus software "use LS 15 angle" in the field *"sample calculation options* subfield *slice MW data from"*. As dn/dc used for the determination of molecular weight a value of 0.094 was used.

This molecular weight at each slice is calculated in the manner as it is described by by C. Jackson and H. G. Barth at low angle. For the low and high molecular region in which less signal of the LS detector or RI detector respectively was achieved a linear fit was used to correlate the elution volume to the corresponding molecular weight. Depending on the sample the region of the linear fit was adjusted.

Molecular weight averages (Mz(LS), Mw(LS) and Mn(LS)), Molecular weight distribution (MWD) and its broadness, described by polydispersity, PD(LS)= Mw(LS)/Mn(LS) (wherein Mn(LS) is the number average molecular weight and Mw(LS) is the weight average molecular weight obtained from GPC-LS) were calculated by Gel Permeation Chromatography (GPC) using the following formulas:

$$M_n(LS) = \frac{\sum_{i=1}^{N} A_i}{\sum(A_i/M_{i(LS)})} \quad (1)$$

$$M_w(LS) = \frac{\sum_{i=1}^{N}(A_i \times M_{i(LS)})}{\sum A_i} \quad (2)$$

$$M_z(LS) = \frac{\sum_{i=1}^{N}(A_i \times M_{i(LS)}^2)}{\sum(A_i/M_i(LS))} \quad (3)$$

For a constant elution volume interval $\Delta V_i$, where $A_i$ and $M_{i(LS)}$ are the chromatographic peak slice area and polyolefin molecular weight (MW) determined by GPC-LS.

Branching Calculation g'(90-100% cum) or g' (85-100% cum)

The relative amount of branching is determined using the g'-index of the branched polymer sample. The long chain branching (LCB) index is defined as g'= $[\eta]_{br}/[\eta]_{lin}$. It is well known if the g' value increases the branching content decreases. $[\eta]$ is the intrinsic viscosity at 160 °C in TCB of the polymer sample at a certain molecular weight and is measured by an online viscosity and a concentration detector, where $[\eta]_{lin}$ is the intrinsic viscosity of the linear polymer having the same chemical compostion. The intrinsic viscosities were measured as described in the handbook of the Cirrus Multi-Offline SEC-Software Version 3.2 with use of the Solomon-Gatesman equation. The $[\eta]_{lin}$ at a certain molecular weight was obtained using the Mark Houwink constant:

$$IV = K_{LLDPE} * M^{\alpha} \quad \text{(equation 1)}$$

The constants K and $\alpha$ are specific for a polymer-solvent system and M is the molecular weight obtained from LS analysis.

To encounter for the amount of comonomer content in the polyethylene-co-alpha-olefine the $[K]_{LLDPE}$ needs to be modified in the following way:

$$K_{LLDPE} = (1-(1-2/x * \text{wt.-\%*(alpha-olefine)})^{1+\alpha} * K_{PE} \quad \text{(equation 2)}$$

Where x is the amount of C atoms in the alpha olefine and $K_{PE}$ is determined by analysing the linear homo PE (NIST 1475a) using $\alpha = 0,725$ and the content of the alpha-olefine is determined by $^{13}$C-NMR. Normally $K_{PE}$ is between 0.00039 and 0.00042.

For linear low density polyethylene (LDPE) a x value of 8 was used to calculate the $K_{LLDPE}$ value

An IR detector determines the necessary concentration of each elution slice.

$[\eta]_{lin}$ is the intrinsic viscosity of a linear sample and $[\eta]_{br}$ the viscosity of a branched sample of the same molecular weight and chemical composition. By dividing the intrinsic viscosity of a branched sample $[IV_b]$ with the intrinsic viscosity of a linear polymer $[IV_l]$ at the same molecular weight, the viscosity branching factor $g'$ can be calculated.

In this case the $g'_{(90-100)}$ and $g'_{(85-100)}$ are calculated by adding the product of $g'_M *a_M$ in the range where the cumulative fraction is 80% to 100% and dividing it through the corresponded signal area of the concentration signal, $a_i$.

$$g'_{(80-100)} = \frac{\sum_{80}^{100} a_i * \frac{[\eta]_{br,i}}{[\eta]_{lin,i}}}{\sum_{80}^{100} a_i} = \frac{\sum_{85}^{100} a_i * g'_i}{\sum_{85}^{100} a_i}$$

This method is particularly used for ethylene polymers.

Reference:

C. Jackson and H. G. Barth, "Molecular Weight Sensitive Detectors" in: Handbook of Size Exclusion Chromatography and related techniques, C.-S. Wu, 2nd ed., Marcel Dekker, New York, 2004, p.103.

### *Flexural Modulus (FM)*

The flexural modulus was determined in a 3-point-bending test at 23 °C according to ISO178 on 80x10x4 mm[3] test bars injection molded in line with ISO1873-2.

### *Differential scanning calorimetry (DSC)*

Differential scanning calorimetry (DSC) analysis, melting temperature ($T_m$) and melt enthalpy ($H_m$), crystallization temperature ($T_c$), and heat of crystallization ($H_c$, HCR) were measured with a TA Instrument Q200 differential scanning calorimetry (DSC) on 5 to 7 mg samples. DSC is run according to ISO11357 / part 3/method C2 in a heat/cool/heat cycle with a scan rate of 10 °C/min in the temperature range of -30 to +225 °C. Crystallization temperature ($T_c$) and heat of crystallization ($H_c$) were determined from the cooling step, while melting temperature ($T_m$) and melt enthalpy ($H_m$) were determined from the second heating step.

Throughout the present description, the term $T_m$ is understood as peak temperature of melting as determined by DSC at a heating rate of 10 K/min. Throughout the present description, the term $T_c$ is understood as peak temperature of crystallization as determined by DSC at a cooling rate of 10 K/min.

### *Notched Impact Strength (NIS)*

The Charpy notched impact strength (NIS) was measured according to ISO179 1eA at +23 °C or at -20 °C, respectively, using injection molded bar test specimens of 80x10x4 mm[3] prepared in accordance with ISO1873-2.

### *Xylene soluble fraction*

The xylene soluble fraction (XS) and xylene insoluble fraction (XI) were determined according to ISO16152 at 25 °C.

### *Intrinsic viscosity (IV)*

The IV of the xylene solubles was measured at 135 °C in decalin according to ISO1628-1 & 3.

*Haze value*

The haze value was determined according to ASTM1003 on 60x60x1 mm$^3$ plaques injection molded in line with EN ISO 1873-2.

*Opto-mechanical ability (OMA)*

Opto-mechanical ability (OMA) is understood as the ratio of mechanical (especially impact and flexural) behaviour, to optical performance, namely haze, wherein the mechanical properties are targeted to be as high as possible and the optical performance is desired to be as low as possible. The opto-mechanical ability is determined according the formula given below:

$$OMA = \frac{Flex\ Modulus\ [MPa] * NIS\ \left[\frac{kJ}{m^2}\right]}{Haze\ (1mm)[\%]}$$

OMA calculated from NIS (-20 °C) as defined above is denominated as OMA (-20 °C).

**Examples**

*Preparation of the heterophasic polypropylene composition*

Three heterophasic polypropylene compositions were prepared in the form of pellets as heterophasic polypropylenes hecoPP1, hecoPP2 and hecoPP3 in a multi-stage polymerization process as described above, under the conditions outlined in Table 1. The catalyst was a Ziegler-Natta catalysts prepared as described in EP-A-3562850. The solid catalyst component was used along with triethylaluminium (TEAL) as co-catalyst and dicyclo pentyl dimethoxy silane (D-donor) as external donor.

*Table 1: Process conditions.*

| *Prepoly reactor* | hecoPP1 | hecoPP2 | hecoPP3 |
|---|---|---|---|
| Temperature [°C] | 20 | 20 | 20 |
| TEAL/C3 [g/t] | 170 | 170 | 170 |
| Donor/C3 [g/t] | 60 | 60 | 60 |
| Pressure reactor [barg] | 55 | 55 | 55 |
| H2 feed (g/h) | 3.00 | 3.00 | 3.00 |
| C3 feed (kg/h) | 60 | 60 | 60 |
| *Loop reactor (A1)* | | | |
| Temperature [°C] | 75 | 75 | 75 |
| Pressure reactor [barg] | 54 | 54 | 54 |
| $H_2/C_3$ ratio [mol/kmol] | 9.56 | 9.59 | 9.36 |
| Split [wt.-%] | 53 | 46 | 51 |
| $MFR_2$ (230°C) [g/10 min]) | 75 | 75 | 75 |
| *Gas phase reactor 1 (A2)* | | | |
| Temperature [°C] | 80 | 80 | 80 |
| Pressure reactor [barg] | 21 | 21 | 21 |
| $H_2/C_3$ ratio [mol/kmol] | 100.24 | 109.57 | 106.89 |
| $C_4/C_3$ ratio [mol/kmol] | 107.54 | 109.89 | 175.12 |

(continued)

| Gas phase reactor 1 (A2) | | | |
|---|---|---|---|
| $C_2/C_3$ ratio [mol/kmol] | 0 | 0 | 0 |
| Split [wt.-%] | 36 | 37 | 36 |
| **Propylene polymer (A)** | | | |
| $MFR_2$ (230 °C) [g/10 min] | 78 | 78 | 69 |
| $C_4$ content [wt.-%] | 2.25 | 2.89 | 3.56 |
| XS [wt.-%] | 3.40 | 3.20 | 3.00 |
| **A2 polymer (calculated)** | | | |
| $MFR_2$ (230 °C) [g/10 min] | 83 | 82 | 61 |
| $C_4$ content [wt.-%] | 5.63 | 6.42 | 8.68 |
| **Gas phase reactor 2 (B)** | | | |
| Temperature [°C] | 70 | 70 | 70 |
| Pressure reactor [barg] | 20 | 20 | 20 |
| $H_2/C_3$ ratio [mol/kmol] | 400.0 | 400.0 | 400.0 |
| $C_2/C_3$ ratio [mol/kmol] | 400.0 | 400.0 | 400.0 |
| Split [wt.-%] | 11 | 17 | 13 |

Properties of the obtained heterophasic polypropylenes hecoPP1, hecoPP2 and hecoPP3 and their respective xylene soluble fractions (XS) and xylene insoluble fractions (XI) are depicted in Table 2.

*Table 2: Properties of the heterophasic polypropylenes.*

| | | hecoPP1 | hecoPP2 | hecoPP3 |
|---|---|---|---|---|
| **Pellets** | | | | |
| $MFR_2$ | g/10min | 50 | 44 | 50 |
| **C2** | wt.-% | 7 | 9.6 | 8 |
| **C4** | wt.-% | 2 | 2.4 | 3.1 |
| | | | | |
| **XI** | wt.-% | 86.1 | 80.7 | 84.7 |
| **C2 in XI** | wt.-% | 2 | 3 | 2.9 |
| **C4 in XI** | wt.-% | 2.4 | 2.9 | 3.4 |
| | | | | |
| | | | | |
| **XS** | wt.-% | 13.9 | 19.3 | 15.3 |
| **C2 in XS** | wt.-% | 39.2 | 38.8 | 40.8 |
| **C4 in XS** | wt.-% | n.d. | n.d. | n.d. |
| **IV of XS** | dl/g | 1.89 | 1.77 | 1.95 |
| n.d. = not determinable | | | | |

*Preparation of the polyolefin composition*

The heterophasic polypropylenes hecoPP1, hecoPP2 and hecoPP3 were mixed with polyethylene CA9150 (Borealis; MFR$_2$ (190 °C): 15 g/10 min, density: 915 kg/m$^3$, T$_m$: 104 °C, and g' factor: 0.27) as ethylene homopolymer (PE) and additives as depicted in Table 3 below, and then compounded in a twin screw extruder ZSK 18, with melt temperature of 200°C and throughput of 7kg/h. Polyolefin compositions were obtained as respective inventive examples IE1, IE2 and IE3. As comparative example CE1, heterophasic polypropylene hecoPP1 without the ethylene homopolymer (PE) was used.

*Table 3: Contents of the examples.*

|  |  | CE1/hecoPP1 | IE1 | IE2 | IE3 |
|---|---|---|---|---|---|
| **hPP1** | wt.-% | 99.4 | 82.4 | 0 | 0 |
| **hPP2** | wt.-% | 0 | 0 | 82.4 | 0 |
| **hPP3** | wt.-% | 0 | 0 | 0 | 82.4 |
| **B215** | wt.-% | 0.15 | 0.15 | 0.15 | 0.15 |
| **CaSt** | wt.-% | 0.05 | 0.05 | 0.05 | 0.05 |
| **NX8000** | wt.-% | 0.4 | 0.4 | 0.4 | 0.4 |
| **PE** | wt.-% | 0 | 17 | 17 | 17 |
| B215 = Irganox® B215 (BAST)<br>CaSt = Calcium stearate, CEASIT FI (Baerlocher),<br>NX8000 = Millad® NX™ 8000 | | | | | |

Properties of the polyolefin compositions of the inventive examples IE1, IE2 and IE3 and their respective xylene soluble fractions (XS) and xylene insoluble fractions (XI) are summarized in Table 4.

*Table 4: Properties of the polyolefin compositions (I).*

|  |  | IE1 | IE2 | IE3 |
|---|---|---|---|---|
| **Pellets** | | | | |
| **MFR$_2$** | g/10min | 44 | 40 | 36 |
| **C2** | wt.-% | 20.8 | 22.6 | 21.8 |
| **C4** | wt.-% | 1.6 | 1.9 | 2.6 |
| | | | | |
| **XI** | wt.-% | 88.5 | 84.0 | 87.3 |
| **C2 in XI** | wt.-% | 18.8 | 19.8 | 18.4 |
| **C4 in XI** | wt.-% | 1.5 | 2 | 2.8 |
| | | | | |
| | | | | |
| **XS** | wt.-% | 11.5 | 16.0 | 12.7 |
| **C2 in XS** | wt.-% | 38.8 | 38.9 | 40.6 |
| **C4 in XS** | wt.-% | n.d. | n.d. | n.d. |
| **IV of XS** | dl/g | 1.82 | 1.71 | 1.89 |
| n.d. = not determinable | | | | |

Further properties of the polyolefin compositions are depicted in Table 5. As comparative example CE2, a random propylene copolymer - produced in the presence of a Ziegler-Natta catalyst - was used. Properties of this propylene copolymer are disclosed in WO 2015150467 A1 (Example CE1). This polymer is often used in packaging applications.

Table 5: Properties of the polyolefin compositions (II).

|  |  | CE1 / hecoPP1 | IE1 | IE2 | IE3 | CE2 |
|---|---|---|---|---|---|---|
| $MFR_2$ | g/10min | 49.5 | 44 | 40 | 36 | 26 |
| $T_c$ | °C | 131 | 130 | 131 | 131 | 109 |
| $T_{m1}$ | °C | 164 | 164 | 163 | 164 | 163 |
| $T_{m2}$ | °C | n.d. | 103 | 103 | 103 | 102 |
| $H_{m1}$ | J/g | 98 | 77 | 70 | 71 | 70 |
| $H_{m2}$ | J/g | n.d. | 23 | 25 | 25 | 1.1 |
| Haze | % | 99 | 47.8 | 59.7 | 52.3 | 55.6 |
| NIS(23°C) | $kJ/m^2$ | 3.9 | 5.9 | 8.1 | 6.8 | 7.9 |
| NIS(-20°C) | $kJ/m^2$ | 2.1 | 2.1 | 3.5 | 2.5 | 2.0 |
| FM | MPa | 1517 | 1194 | 1052 | 1128 | 932 |
| OMA(-20°C) | $kJMPa/m^2$ | 31.6 | 52.5 | 61.3 | 53.3 | 33.5 |
| n.d. = not determinable | | | | | | |

When compared to CE1, IE1 has lower haze (60x60x1 $mm^3$ plaques), lower stiffness and similar temperature impact at -20 °C. When xylene soluble fraction (XS) is increased - as in IE2, the temperature impact at -20 °C is even improved.

When compared to CE2, all inventive examples have better stiffness and temperature impact at -20 °C. Optical properties are similar or slightly improved.

The OMA (opto-mechanical ability, based on -20°C NIS) values, demonstrate that all inventive examples have a much better balance between stiffness, impact and optics than the comparative examples.

## Claims

1. A polyolefin composition comprising:

I) 55 to 95 wt.-%, based on the total weight of the polyolefin composition and determined at 25 °C according to ISO16152, of a xylene insoluble fraction (XI) comprising comonomer units derived from propylene, comonomer units derived from ethylene in a content in the range of from 5.0 to 40.0 wt.-% and comonomer units derived from 1-butene in a content in the range of from 1.0 to 10.0 wt.-%; and

II) 5 to 45 wt.-%, based on the total weight of the polyolefin composition and determined at 25 °C according to ISO16152, of a xylene soluble fraction (XS) comprising comonomer units derived from propylene, comonomer units derived from ethylene in a content in the range of from 20.0 to 60.0 wt.-% and optionally comonomer units derived from 1-butene, and the xylene soluble fraction (XS) having an intrinsic viscosity IV, determined according to ISO 1628-1 & 3, in the range of from 1.2 to 3.0 dl/g; and

wherein the polyolefin composition has at least two melting temperatures, determined according to differential scanning calorimetry (DSC) described in the specification, a first melting temperature $T_{m1}$ in the range of from 150 to 167 °C and a second melting temperature $T_{m2}$ in the range of from 90 to 125 °C; and

a melt flow rate $MFR_2$ (230 °C), determined according to ISO1133, in the range of from 20 to 80 g/10 min.

2. The polyolefin composition according to claim 1, wherein

I) the xylene insoluble fraction (XI) comprises:

a) a propylene copolymer (A) of propylene with 1-butene comonomer units in a content in the range of from 1.0 to 10.0 wt.-% and optionally with ethylene comonomer units in a content in the range of from 0 to 6.0 wt.-%, preferably having a melt flow rate $MFR_2$ (230 °C), determined according to ISO1133, in the range of from 30 to 400 g/10 min; and

b) an ethylene homopolymer (C), preferably having a melt flow rate $MFR_2$ (190 °C), determined according to ISO1133, in the range of from 4 to 100 g/10 min and a density, determined according to ISO1183, in the range of from 910 to 940 kg/m$^2$; and

II) the xylene soluble fraction (XS) comprises:

c) a propylene ethylene elastomer (B) having an ethylene content in the range of from 20 to 60 wt.-%, and optionally comprising 1-butene comonomer units.

3. The polyolefin composition according to any one of the preceding claims, wherein the polyolefin composition comprises a heterophasic polypropylene composition comprising a propylene copolymer (A) of propylene with 1-butene comonomer units in a content in the range of from 1.0 to 10.0 wt.-% and optionally with ethylene comonomer units in a content in the range of from 0 to 6.0 wt.-%, and a propylene ethylene elastomer (B) having an ethylene content in the range of from 20 to 60 wt.-%, and optionally comprising 1-butene comonomer units, preferably wherein, based on the total weight of the heterophasic polypropylene composition, the content of the propylene copolymer (A) is from 55 to 90 wt.-%, and the content of the propylene ethylene elastomer (B) is from 10 to 45 wt.-%.

4. The polyolefin composition according to claim 3, wherein the polyolefin composition is a blend of the heterophasic polypropylene composition and the ethylene homopolymer (C), preferably wherein, based on the total weight of the polyolefin composition, the content of the heterophasic polypropylene composition is from 75 to 95 wt.-%, and the content of the ethylene homopolymer (C) is from 5 to 25 wt.-%.

5. The polyolefin composition according to any one of claims 2 to 4, wherein the propylene copolymer (A) and the propylene ethylene elastomer (B) are prepared in the presence of a Ziegler-Natta catalyst comprising:

a) compound(s) of a transition metal of Group 4 to 6 of IUPAC;

b) a Group 2 metal compound;

c) an internal donor, wherein said internal donor is a non-phthalic compound, preferably is a non-phthalic acid ester, and preferably is selected from (di)esters of non-phthalic carboxylic (di)acids, 1,3-diethers, derivatives and mixtures thereof;

d) a co-catalyst; and

e) optionally an external donor.

6. The polyolefin composition according to any one of claims 2 to 5, wherein the propylene copolymer (A) is a multimodal propylene copolymer, preferably comprising two different propylene polymer fractions:

a1) 25 to 75 wt.-%, based on the total weight of the propylene copolymer (A), of a first propylene polymer fraction (A1) being a propylene homopolymer or a propylene copolymer of propylene with 1-butene comonomer units and/or ethylene comonomer units; and

a2) 75 to 25 wt.-%, based on the total weight of the propylene copolymer (A), of a second propylene polymer fraction (A2), being a propylene copolymer of propylene with 1-butene comonomer units and optionally ethylene comonomer units.

7. The polyolefin composition according to any one of the preceding claims, having a first melt enthalpy $H_{m1}$ at the first melting temperature $T_{m1}$ in the range of from 60 to 95 J/g, and a second melt enthalpy $H_{m2}$ at the second melting temperature $T_{m2}$ in the range of from 5 to 50 J/g, wherein the melting temperature and the melt enthalpy are determined according to differential scanning calorimetry (DSC) described in the specification.

8. The polyolefin composition according to any one of the preceding claims, wherein the polyolefin composition has a flexural modulus, determined according to ISO178, of more than 950 MPa, and/or an opto-mechanical ability at -20 °C (OMA (-20 °C)), determined as described in the specification, of more than 35 kJMPa/m$^2$.

9. The polyolefin composition according to any one of the preceding claims, wherein the polyolefin composition has a haze value, determined according to ASTM1003 on 60x60x1 mm$^3$ plaques, of less than 70 %, and/or a crystallization temperature $T_c$, determined according to differential scanning calorimetry (DSC) described in the specification, in the range of from 105 to 140 °C.

10. The polyolefin composition according to any one of the preceding claims, wherein the polyolefin composition has an impact strength at +23 °C, determined according to ISO179/1eA, in the range of from 4.0 to 15.0 kJ/m$^2$, and/or an impact strength at -20 °C, determined according to ISO179/1eA, in the range of from 1.8 to 10.0 kJ/m$^2$.

11. The polyolefin composition according to any one of the preceding claims, wherein the polyolefin composition comprises a 1-butene content, determined by NMR spectroscopy, in the range of from 0.5 to 5.0 wt.-%.

12. A process for the preparation of the polyolefin composition according to any one of the proceeding claims, wherein the process comprises preparing a heterophasic polypropylene composition by a multi-stage polymerization process and blending the heterophasic polypropylene composition with an ethylene homopolymer (C) to obtain the polyolefin composition.

13. The process according to claim 12, wherein the multi-stage polymerization process comprises:

a) preparing a first propylene polymer fraction (A1) being a propylene homopolymer or a propylene copolymer of propylene with 1-butene comonomer units and/or ethylene comonomer units in a bulk phase reactor, preferably a loop reactor, in a first polymerization stage in the presence of a Ziegler-Natta catalyst;
b) transferring the first propylene polymer fraction (A1) to a second polymerization stage and preparing a second propylene polymer fraction (A2) being a propylene copolymer of propylene with 1-butene comonomer units and optionally ethylene comonomer units in the presence of a Ziegler-Natta catalyst in a first gas phase reactor (GPR1); and
wherein the first propylene polymer fraction (A1) and the second propylene polymer fraction (A2) together form a propylene copolymer (A) of propylene with 1-butene comonomer units in a content in the range of from 1.0 to 10.0 wt.-% and optionally ethylene comonomer units in a content in the range of from 0 to 6.0 wt.-%, preferably having a melt flow rate MFR$_2$ (230 °C), determined according to ISO1133, in the range of from 30 to 400 g/10 min;
c) transferring the propylene copolymer (A) to a third polymerization stage and, preferably in the presence of a Ziegler-Natta catalyst, preparing a propylene ethylene elastomer (B) having an ethylene content in the range of from 20 to 60 wt.-%, and optionally comprising 1-butene comonomer units in a second gas phase reactor (GPR2); to obtain a heterophasic polypropylene composition, preferably having a melt flow rate MFR$_2$ (230 °C), determined according to ISO1133, in the range of from 10 to 100 g/10 min, and a melting temperature T$_m$, determined according to ISO11357-3, in the range of from 150 to 167 °C.

14. An article comprising the polyolefin composition according to any one of claims 1 to 11, preferably being a film or a molded article.

15. Use of the polyolefin composition according to any one of claims 1 to 11 for the manufacture of an article, preferably being a film or a molded article.

Europäisches
Patentamt

European
Patent Office

Office européen
des brevets

# EUROPEAN SEARCH REPORT

Application Number

EP 22 21 4924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 915 846 A1 (BOREALIS AG [AT]) 9 September 2015 (2015-09-09) | 1-15 | INV. C08L23/14 C08F210/06 B32B27/08 C08J5/18 |
| Y | * paragraphs [0002], [0026], [0035], [0042], [0050], [0066], [0124]; claims 1-3, 5, 6; example all * | 1-15 | |
| X | EP 2 431 416 A1 (BOREALIS AG [AT]) 21 March 2012 (2012-03-21) | 1-15 | |
| Y | * paragraphs [0004], [0022], [0023], [0043], [0051], [0054], [0127]; claims 1, 2, 13; example all; table 2 * | 1-15 | |
| Y | WO 98/59002 A1 (BOREALIS AS [DK]; PITKANEN PAIVI [FI] ET AL.) 30 December 1998 (1998-12-30) * claims 1, 3, 6, 13; examples 9-14 * | 1-15 | |

TECHNICAL FIELDS
SEARCHED     (IPC)

B32B
C08J
C08F

The present search report has been drawn up for all claims

| Place of search | Date of completion of the search | Examiner |
|---|---|---|
| Munich | 1 June 2023 | Bernhardt, Max |

EPO FORM 1503 03.82 (P04C01)

**ANNEX TO THE EUROPEAN SEARCH REPORT
ON EUROPEAN PATENT APPLICATION NO.**

EP 22 21 4924

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2023

| Patent document cited in search report | | | Publication date | Patent family member(s) | | | Publication date |
|---|---|---|---|---|---|---|---|
| EP 2915846 | A1 | | 09-09-2015 | BR | 112014000551 | A2 | 14-02-2017 |
| | | | | CN | 103649207 | A | 19-03-2014 |
| | | | | EP | 2731988 | A1 | 21-05-2014 |
| | | | | EP | 2915846 | A1 | 09-09-2015 |
| | | | | ES | 2552779 | T3 | 02-12-2015 |
| | | | | ES | 2603085 | T3 | 23-02-2017 |
| | | | | KR | 20140033225 | A | 17-03-2014 |
| | | | | US | 2014213719 | A1 | 31-07-2014 |
| | | | | WO | 2013010879 | A1 | 24-01-2013 |
| EP 2431416 | A1 | | 21-03-2012 | CN | 103097455 | A | 08-05-2013 |
| | | | | EP | 2431416 | A1 | 21-03-2012 |
| | | | | ES | 2398654 | T3 | 20-03-2013 |
| | | | | KR | 20130052673 | A | 22-05-2013 |
| | | | | US | 2013253125 | A1 | 26-09-2013 |
| | | | | WO | 2012034956 | A1 | 22-03-2012 |
| WO 9859002 | A1 | | 30-12-1998 | AT | 256714 | T | 15-01-2004 |
| | | | | AU | 8121198 | A | 04-01-1999 |
| | | | | BR | 9810290 | A | 19-09-2000 |
| | | | | CN | 1261390 | A | 26-07-2000 |
| | | | | DE | 69820626 | T2 | 09-06-2004 |
| | | | | EP | 0991719 | A1 | 12-04-2000 |
| | | | | ES | 2209159 | T3 | 16-06-2004 |
| | | | | JP | 4037468 | B2 | 23-01-2008 |
| | | | | JP | 2002508013 | A | 12-03-2002 |
| | | | | KR | 20010020493 | A | 15-03-2001 |
| | | | | US | 6342564 | B1 | 29-01-2002 |
| | | | | WO | 9859002 | A1 | 30-12-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3126411 A
- US 4582816 A
- US 3405109 A
- US 3324093 A
- EP 479186 A
- US 5391654 A
- US 3374211 A
- US 3242150 A
- EP 1310295 A
- EP 891990 A

- EP 1415999 A
- EP 1591460 A
- WO 2007025640 A
- EP 0887379 A
- EP 0517868 A
- WO 9619503 A
- WO 9632420 A
- EP 3562850 A
- WO 2015150467 A1

**Non-patent literature cited in the description**

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198

- **CASTIGNOLLES, P. ; GRAF, R. ; PARKINSON, M. ; WILHELM, M. ; GABORIEAU, M.** *Polymer,* 2009, vol. 50, 2373
- **RESCONI, L. ; CAVALLO, L. ; FAIT, A. ; PIEMONTESI, F.** *Chem. Rev.,* 2000, vol. 100, 1253
- **J. RANDALL.** *Macromol. Sci., Rev. Macromol. Chem. Phys.,* 1989, vol. C29, 201
- **A.J. BRANDOLINI ; D.D. HILLS.** NMR spectra of polymers and polymer additives. Marcel Deker Inc, 2000
- **L. ABIS.** *Mackromol. Chem.,* 1986, vol. 187, 1877-1886
- Molecular Weight Sensitive Detectors. **C. JACKSON ; H. G. BARTH ; C.-S. WU.** Handbook of Size Exclusion Chromatography and related techniques. Marcel Dekker, 2004, 103